(19) Europäisches Patentamt / European Patent Office / Office européen des brevets

(11) **EP 1 972 416 B1**

(12) **EUROPEAN PATENT SPECIFICATION**

(45) Date of publication and mention
of the grant of the patent:
**25.04.2018 Bulletin 2018/17**

(51) Int Cl.:
**B25J 9/16** (2006.01)

(21) Application number: **07104820.1**

(22) Date of filing: **23.03.2007**

(54) **Robots with occlusion avoidance functionality**

Roboter mit Verstopfungsvermeidungsfunktion

Robots avec fonction d'évitement d'occlusion

(84) Designated Contracting States:
**DE FR GB**

(43) Date of publication of application:
**24.09.2008 Bulletin 2008/39**

(73) Proprietor: **Honda Research Institute Europe GmbH**
**63073 Offenbach/Main (DE)**

(72) Inventor: **Sugiura, Hisashi**
**60488 Frankfurt (DE)**

(74) Representative: **Rupp, Christian et al**
**Mitscherlich PartmbB**
**Patent- und Rechtsanwälte**
**Sonnenstraße 33**
**80331 München (DE)**

(56) References cited:
FR-A1- 2 861 857          US-A- 5 737 500
US-A1- 2006 095 160

- **NEMEC B ET AL: "Implementation of force control on redundant robot" INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA,IEEE, US, vol. 2, 13 October 1998 (1998-10-13), pages 1314-1319, XP010311517 ISBN: 0-7803-4465-0**
- **MEZOUAR Y ET AL: "Avoiding self-occlusions and preserving visibility by path planning in the image", ROBOTICS AND AUTONOMOUS SYSTEMS, ELSEVIER SCIENCE PUBLISHERS, AMSTERDAM, NL, vol. 41, no. 2-3, 30 November 2002 (2002-11-30), pages 77-87, XP004391223, ISSN: 0921-8890, DOI: 10.1016/S0921-8890(02)00277-4**
- **FOLIO D ET AL: "A controller to avoid both occlusions and obstacles during a vision-based navigation task in a cluttered environment", DECISION AND CONTROL, 2005 AND 2005 EUROPEAN CONTROL CONFERENCE. CDC-E CC '05. 44TH IEEE CONFERENCE ON SEVILLE, SPAIN 12-15 DEC. 2005, PISCATAWAY, NJ, USA,IEEE, 12 December 2005 (2005-12-12), pages 3898-3903, XP010884372, ISBN: 978-0-7803-9567-1**

**Description**

The present invention generally relates to the field of robots and particularly to robots acting autonomously.

When a trajectory of an effector, such as e.g. a robot is controlled, the target state has to be defined. The target state is for example defined by an object that is to be handled by a manipulating arm of a robot. In general the position of the object can be described by three parameters. In addition to the object position it is necessary to describe a spatial orientation which is often made by Kardan- or Euler-angles.

To carry out the movement of an effector of a robot, the trajectory is usually generated by mapping increments from a control parameter space on a configuration space.

The control parameter space or task space is the space of the command elements. The control parameter space is composed of the command elements. The command (also "target" or "task") elements are the elements of a respective command vector. These elements define a useful description of what should be controlled, e.g. the position of a hand or the inclination of a head. The configuration space is the space of controllable degrees of freedom. The configuration space can be composed of individual joints of a robot and/or more complex kinematics mechanisms to which controllable degrees of freedom can be assigned.

The "Null space" represents the dimensional difference between the joint space and the task space. The Null space contains the redundant degrees of freedom, in which movements can be carried out without effecting the task space motion.

A definition of the Null space can be found on the Internet(see http://www-robotics.cs.umass.edu/ Research/Glossary/null_space.html):

> Null Space: *The set of arguments of a linear operator such that the corresponding function value is zero. Redundant systems have a (local) null space that can be used to address a secondary objective, such as kinematic conditioning, without disturbing a primary task.*

The present invention particularly targets at a particular safety mechanism, i.e. collision avoidance for robots. Traditionally, targets of robots were given by operators and they just tracked planned trajectories. The safety mechanism is an emergency stop mechanism which simply freezes motions if any. However, nowadays the robots, in particular humanoid robots, are expected to work outside of field environment such as factories. They have to interact with dynamic environment and the robot's motions are unpredictable. Thus there is a need for a more advanced safety mechanism, which will be called a collision avoidance mechanism instead of the emergency stop mechanism. The advantage of collision avoidance is not only safety. It does not necessarily stop the robot's target reaching motions and it expands the robot's working range.

The known collision avoidance approaches can be divided into two categories. One is a planning (non realtime) method which generates trajectories taking into account of obstacles.

James Kuffner et al. "Self-collision detection and prevention for humanoid robots", In proceedings of the IEEE International Conference on Robotics and Automation, 2002, proposes a collision avoidance on a humanoid robot. This document proposes a fast collision detection method and a realtime planning for gait generations taking into account of leg interference.

James Kuffner et al. "Dynamically-stable motion planning for humanoid robots", Autonomous Robots, volume 12, pages 105-118, 2002, proposes a dynamics based collision free planning method using Rapidly exploring Random Trees (RRTs). However, these methods are hard to apply for interactive motions because the computation time is higher as the degrees of freedom of robots increase such as humanoid robots.

The other method is reactive (real-time) collision avoidance. It modifies trajectories which are quite simple such as line segments connecting current positions and target positions.

This method has to decide the direction of avoidance and how to switch the priority between target reaching motions and collision avoidance motions depending on a magnitude of danger of collisions in real-time. For instance, the distance between segments is large enough, target reaching motions should have higher priority than collision avoidance ones.

It is known that Collision avoidance can use nullspace optimization criteria (see e.g. Michael Gienger, Herbert Janssen, and Christian Goerick. Task-oriented whole body motion for humanoid robots. In proceedings of the IEEERAS International Conference on Humanoid Robots, 2005; as well as Michael Gienger, Herbert Janssen, and Christian Goerick. Exploiting task intervals for whole body robot control. In proceedings of the IEEE/RSJ International Conference on Intelligent Robots and Systems, 2006).

A particular case of collision avoidance is occlusion avoidance: When a robot arm moves to a target which is captured by its visual sensors(e.g. cameras), sometimes an arm segment hides the target by its own movements. This sometimes causes oscillations. For example, if the robot loses the target it retracts the arm. Then the target is appeared. It goes to reach the target. David Folio et al.: "A controller to avoid both occlusions and obstacles during a vision-based navigation task in a cluttered environment", in proceedings of the 44th Conference on Decision and Control, and the European Control Conference 2005, Seville, Spain December 12-15, 2005, XP010884372, proposes a method for avoiding ocllusions. It is the object of the present invention to propose a occlusion avoidance technique for a robot having visual sensor means.

Generally this object is achieved by means of the features of the independent claims. The dependent claims develop further the central idea of the present invention.

The invention proposes to set up a virtual object between the cameras and targets. Then a real time collision avoidance control is performed taking into account the virtual object. The robot's segments (arms etc.) will then not penetrate a space defined by the virtual object. Thus the trajectory of the arm moves to the target with avoiding the area. When the hand is close to a target, then it becomes smaller as the distance between the hand and the target.

The motion control calculation can comprise the step of mapping a collision avoidance motion in the nullspace and a target reaching motion in the task space. Thus the motion control calculation takes into account collision avoidance in the nullspace.

A first aspect of the invention relates to the control of a robot having at least one visual sensor,

the method comprising the steps of:

- defining a target for a motion of the robot,
- calculating a motion control signal adapted for the robot reaching the target,
- calculating a collision avoidance control signal for avoiding collision of segments of the robot and a virtual object which is set up between the visual sensing means and the target, based on the closest points of the segments of the robot and the virtual object, wherein the weight of the motion control output signal is the higher the lower a calculated collision risk, and
- controlling a motion of the robot according to the combined signal such that no segment of the robot enters the space defined by the virtual object.

The virtual object can be symmetrical around an axis connecting the center of the visual sensing means and the target center position.

The virtual object can define a space having the contours of a three dimensional ellipsoid.

The weights can be changed gradually in order to perform a soft task switching between target reaching by motion and collision avoidance.

The motion control calculation can comprise the step of mapping a collision avoidance motion in the nullspace and a target reaching motion in the task space.

The weight of the collision avoidance output signal can be zero as long as the distance between the closest points is larger than a preset avoidance threshold distance.

The method can comprise the steps of:

carrying out a collision avoidance control by

- calculating the two closest point of different segments of the robot connected to each other via at least one joint, or a segment of the robot and another object, and
- controlling a collision avoidance motion of the robot only in the dimension along the connection line between the closest points.

The nullspace of the collision avoidance control can be allocated to the target reaching by motion.

The collision avoidance control can map a collision avoidance motion in the task space and a target reaching motion in the nullspace.

The invention also relates to a computer program product, implementing a method according to any of the preceding claims when run on a computing device.

Finally, the invention also relates to a robot having visual sensing means and a motion control unit, wherein the motion control unit of the robot comprises

- a distance computing module calculating the two closest points between a segment of the robot and a virtual object defining a space between the visual sensing means and a target,
- a motion control module,
- a collision avoidance module supplied with an output signal from the distance computing module, configured to calculate a collision avoidance control signal for avoiding collision of segments of the robot and the virtual object,
- a blending control unit for combining the output control signals of the motion control module and the collision avoidance control module in order to generate a motion control signal for the robot.

The robot can be a humanoid biped robot.

The invention can be implemented e.g. on a humanoid robot, such as e.g. a bipedal walking robot. The arm can avoid occlusion of the visual sensing means of the robot.

Further features, advantages and objects of the present invention will become evident for the skilled person when reading the following detailed explanation of a preferred embodiment of the invention when taken in conjunction with the figures of the enclosed drawings.

Figure 1 shows a humanoid robot having 17 segments, wherein each segment is composed of one or more sphere-swept-lines (SSL) or spheres.

Figure 2 illustrates the collision avoidance coordinate system, the origin of which is the closest point on the lower arm. y is align to a line which connects closest points. x is align to the vector which is from elbow to wrist position. z direction is outer product of x and y axis.

Figure 3 shows different control modules of a robot according to the present invention.

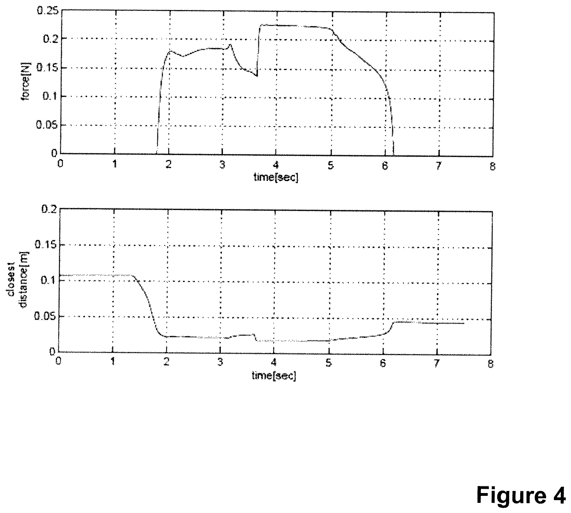

Figure 4 illustrates the virtual force (upper graphics) being a function of the closest distance).

Figure 5 illustrates the occlusion avoidance approach according to the present invention on the basis of a virtual object (obstacle).

## DISTANCE COMPUTATION

For collision avoidance, it is necessary to compute distances and closest points between segments which are the physical links separated by joints. It is more complex to compute actual distances and closest points for all possible segment pairs of humanoid robots with respect to computation time as the invention seeks to compute them on the embedded computer of the robot.

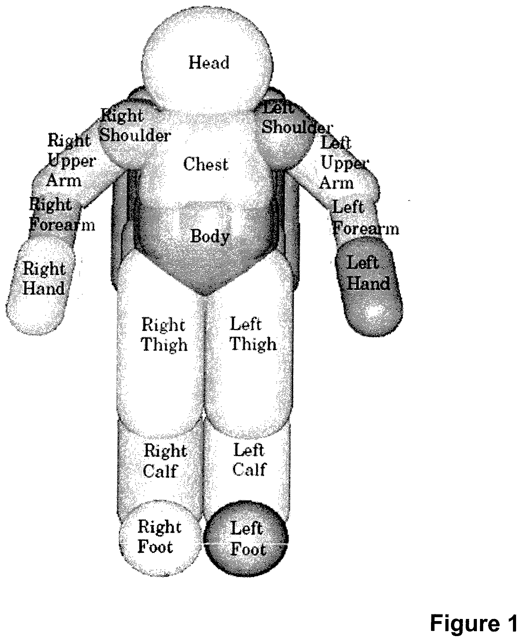

Thus the invention proposes to define a collision model with primitive objects as shown in Fig.1. Each segment (*Head*, *Right Shoulder* and so on) is composed of one or more spheres or swept sphere lines (SSLs) in order to cover the shape of the robot. The distances and closest points are then calculated based on this model.

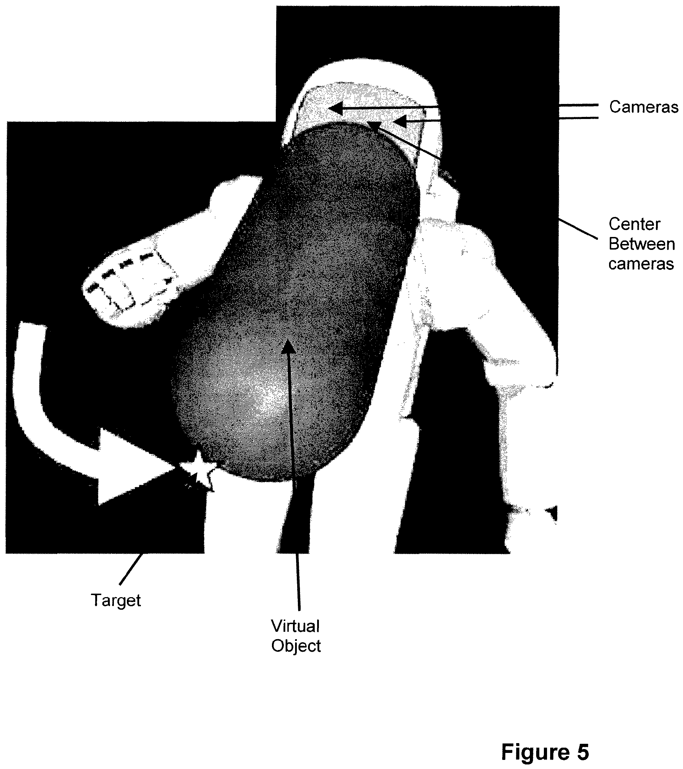

In addition a virtual object as shown in Figure 5 is taken into account thus also carrying out a computation of distances and closest points between a segment of the robot (e.g. an arm) and the virtual object.

As shown in Figure 5 the robot is a humanoid robot with a moveable head which is provided at its front with two cameras. The virtual object to be avoided by segments of the robot is adaptively arranged between the cameras and the target. "Adaptively" is to be understood such that the virtual object is adapted to any change of the position of the target of the robot's reaching motion relative to the cameras.

## COLLISION AVOIDANCE

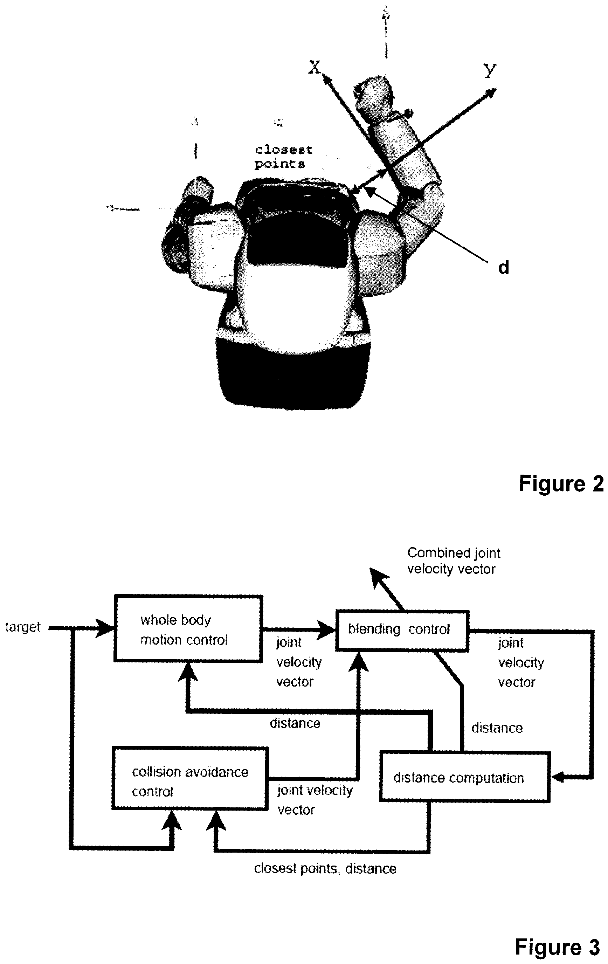

The role of a collision avoidance is to move away segments of the robot which are close each other. One of the most efficient direction for this moving apart is aligned to the vector which is connecting the closest points of the segments. The invention defines a collision avoidance coordinate system for task space motions in the collision avoidance control. The example of collision avoidance coordinate system is defined as shown Fig. 2. The origin is the closest point on the lower arm. y is aligned to a line which connects the closest points so that the direction of avoidance is aligned to this axis. x is aligned to the vector which is from elbow to wrist position. z direction is outer product of an unit vector of x and y axis. The collision avoidance moves segments only in the y direction on this coordinate system.

In other words, according to the present invention only one degree of freedom is used for the collision avoidance instead of e.g. three degrees of freedom. The other degrees of freedom remain available for nullspace and thus e.g. for target reaching motions.

Figure 3 shows the main computing blocks for implementing the invention. A target (defined externally or by the robot itself) is supplied to a motion control unit such as e.g. a whole body motion (WBM) control unit and a collision avoidance (CA) unit.

The motion control unit outputs a first joint velocity vector signal to a blending unit which combines this signal with a second joint velocity vector signal from the CA control unit. The blending control unit outputs a combined joint velocity vector on the basis of which the robot's motion is controlled.

The combined joint velocity vector is furthermore supplied to a distance computing unit calculating the two closest points of different segments of the robot connected to each other via at least one joint, or a segment of the robot and another object. The distance computing unit outputs closest point data and distance information to the CA control unit. The distance computing unit furthermore outputs distance information to the motion control unit and to the blending unit. The blending unit calculates the blending ratio between the first and the second joint velocity vector on the basis of the supplied distance information.

*A. Collision avoidance control using nullspace criteria*

Generally the Cartesian position and orientation x of an effector of a robot can be described as a function of the vector of joint variables q of the manipulator.

$$\mathbf{x} = \mathbf{f}(\mathbf{q})$$

While this equation can be obtained easily, the inverse problem is crucial. In the redundant case it is generally not possible to find an inverse mapping $\mathbf{f}^{-1}$. Instead of constructing an inverse function $\mathbf{g}(\mathbf{x})$ with

$$\mathbf{f}(\mathbf{g}(\mathbf{x})) = \mathbf{x}$$

analytically, the problem is often reformulated in the velocities utilizing the partial derivation of $\mathbf{f}(\mathbf{q})$.

$$\dot{x} = J(q)\dot{q}$$

$$J = \frac{\partial f(q)}{\partial q}$$

Due to the fact that the inverse of the non-square (analytical) Jacobian $\mathbf{J}(\mathbf{q})$ does not exist in the redundant case, the pseudo inverse is utilized.

The task space is used for collision avoidance and the nullspace is used for moving to the target using potential function (cost function). In this control method, each joint velocity is computed as

$$\dot{q}_{ca} = J_{ca}^{\#}(q)|_{row,y}\,\dot{y}_{ca} + N_{ca}\boldsymbol{\xi}_t \qquad . \qquad\qquad (1)$$

$\mathbf{J_{CA}(q)}$ is the collision avoidance Jacobian between closest points.

$\mathbf{N_{ca}}$ is a matrix which maps $\xi$ into the nullspace.

$$J_{ca}^{\#}(q)|_{row,y}$$

is the row vector extracted from the pseudo inverse Jacobian $\mathbf{J_{CA}(q)}$ and which is in the y axis in the collision avoidance coordinate system illustrated in Fig.2.

$\dot{y}_{ca}$ is an avoidance velocity which is derived from a virtual force $F_{virtual}$.

In the described example the collision avoidance takes over control only in one degree-of-freedom (here: in the y direction) in order to avoid the closest segment. Zje collision avoidance does not affect other DoFs, which remain available for the task execution (e.g. target reaching motions concerning to x and z direction). It means that the collision avoidance uses one degree of freedom for each arm respectively.

In the following equation (2) $\mathbf{D}$ is a pre-set non zero dampening coefficient.

$$\dot{y}_{ca} = \frac{F_{virtual}}{D} \qquad\qquad (2)$$

$$F_{virtual} = \begin{cases} d_a - d & \text{if} \quad d < da \\ 0 & \text{otherwise} \end{cases} \qquad (3)$$

If the distance **d** between the two closest points is shorter than a threshold distance **d$_a$** for activating/deactivating the collision avoidance, the virtual force value and thus the avoidance velocity is greater than zero. The virtual force and thus the avoidance velocity increase gradually (e.g. linearly) with the difference between **d** and **d$_a$**. Thus the collision avoidance is activated as soon as the closest point distance **d** is smaller than the preset threshold value **d$_a$**. In the example of Figure 2 the distance **d** between the closest points of the robot is indicated as the distance between the right arm and the front of the body of the humanoid robot).

Note that in order to avoid occlusion, i.e. the presence of a segment of the robot between the robot's vision sensors and a target, the closest point determination and distance calculation takes into account the contours of a virtual object between the visual sensors of the robot and the target. This is illustrated in Figure 5 showing that a virtual object, e.g. a SSL defined object, is "placed" between the visual input means of the robot and the target.

Preferably the object starts from the center point between the two cameras of the robot. Preferably the virtual object thus has the contours of a 3 dimensional ellipsoid, i.e. a 3 dimensional object which is symmetric in rotation around the axis connecting the center point between the stereo cameras of the robot and the target center.

**N$_{ca}$** is a matrix which maps $\xi$ into nullspace and **$I$** is the identity matrix.

$$N_{ca} = I - J_{ca}(q)^{\#} J_{ca}(q) \qquad (4)$$

The potential function **H$_t$(r)** leads to the target for the nullspace. Let $\alpha$**(t)** be a step width.

$$\xi_t = -\alpha_t \left( \frac{\partial H_t(r)}{\partial q} \right)^T \qquad (5)$$

$$H_t(r) = \frac{1}{2}(r_{curr} - r_t)^T W_t (r_{curr} - r_t) \qquad (7)$$

$$\frac{\partial H_t(r)}{\partial q} = \frac{\partial H_t(r)}{\partial r} \frac{\partial r}{\partial q}$$
$$= \frac{\partial H_t(r)}{\partial r} J(q) \qquad (6)$$

$W_t$ weighting matrix
$r_t$ target vector

Thus, the collision avoidance controls joints for the collision avoidance in task space and the target reaching in nullspace.

**B. Motion control**

On the other hand, the motion control is used in order to control the robot which has redundant degrees of freedom also with nullspace optimization criteria as,

$$\dot{q}_{wbm} = J^{\#}_{wbm}(q)\dot{x}_{task} + N_{wbm}\xi_{wbm} \qquad (8)$$

$$N_{wbm} = I - J^{\#}_{wbm}(q) J_{wbm}(q) \qquad (9)$$

$\dot{q}_{wbm}$ joint velocity vector

$J^{\#}_{wbm}(q)$ pseudo inverse Jacobian of overall joints

$\dot{x}_{task}$ task velocity vector

The matrix $\mathbf{N_{wbm}}$ maps an arbitrary joint velocity vector $\xi_{\mathbf{wbm}}$ into the nullspace. Two cost functions can be used for the nullspace. Let $\alpha_{\mathbf{jc}}$ and $\alpha_{\mathbf{ca}}$ be the step width

$$\xi_{wbm} = -\alpha_{jc}(\frac{\partial H_{jc}(q)}{\partial q})^T - \alpha_{ca}(\frac{\partial H_{ca}(q)}{\partial q})^T \qquad (10)$$

The first cost function penalizes deviations from an arbitrary joint center vector $\tilde{q}|$. This cost function seeks to control any joint close to its neutral position. To this regard a joint limit avoidance cost function is used.

$$H_{jc}(q) = \frac{1}{2}(q - \tilde{q})^T W_{jc}(q - \tilde{q}) \qquad (11)$$

$\mathbf{W_{jc}}$ is a weighting matrix. In the easiest case, we choose joint center $\tilde{q}|$ accordingly. This cost function allows to keep simply away from the joint limits.

The second one cost function implements the collision avoidance.

$$\frac{\partial H_{ca}(d)}{\partial q} = \frac{\partial H_{ca}(d)}{\partial d} \frac{\partial d}{\partial q} = \frac{\partial H_{ca}(d)}{\partial d} J^{\#}_{ca}(q) \qquad (12)$$

$$H_{ca}(d) = \frac{1}{2}(d_{safe} - d)^T W_{ca}(d_{safe} - d) \qquad (13)$$

$\mathbf{W_{ca}}$ is a weighting matrix for the collision avoidance. Thus, the motion controls joints for the target reaching in nullspace and the collision avoidance and joint limit avoidance in nullspace.

**C. Integration of motion control and collision avoidance**

The output of the motion control and the collision avoidance one is blended on the joint velocities according to the closest distance. The final joint velocity vector $\dot{q}$ is

$$\dot{q} = \{1 - f(d)\} \dot{q}_{wbm} + f(d)\dot{q}_{ca} \qquad . \qquad (14)$$

$\dot{q}_{control}$ is the joint velocity vector which is computed by a robot controller such as e.g. motion control.

$\dot{q}_{ca}$ is the joint velocity vector which is computed by the collision avoidance controller.

$\mathbf{f(d)}$ is a gain factor which can assume values between 0 and 1 and represents the magnitude of danger of collisions e.g. as a function of the shortest distance between segments. If $\mathbf{f(d)}$ is equal to "1", the collision avoidance entirely takes over control. If $\mathbf{f(d)}$ is equal to "0", the robot controller entirely takes over control. $\mathbf{f(d)}$ is defined as following:

$$f(d) = \begin{cases} \frac{d-d_a}{d_b-da} & \text{if} \quad d \leq d_a \\ 0 & \text{otherwise} \end{cases} \qquad (15)$$

$\mathbf{d_b}$ is a preset constant threshold distance where the motion control is switched off, and $\mathbf{d_a > d_b}$.

If **d** is bigger than $\mathbf{d_a}$, the collision avoidance control is deactivated and the robot tracks the trajectory which is generated by the motion control. However, trajectories computed by motion take into account collision avidance in nullspace. If **d** is smaller than $\mathbf{d_a}$, the collision avoidance is activated. The ratio between them are depending on the shortest distance which is closest segments decides the priority in between.

Both the collision avoidance control and the robot control use nullspace optimization criteria. These criteria are composed of task space and nullspace. The task space is always higher priority than nullspace. On one hand, the robot control maps a target reaching motion in task space and a collision avoidance one in nullspace. On the other hand, the collision avoidance control maps a collision avoidance motion in task space and a target reaching one in nullspace.

|  | motion in task space | motion in nullspace |
|---|---|---|
| robot control ($\dot{\boldsymbol{q}}_{control}$) | target reaching | collision avoidance |
| collision avoidance control ($\dot{\boldsymbol{q}}_{ca}$) | collision avoidance | target reaching |

As illustrated by the above equation (14), the robot control contribution and the collision avoidance control contribution are blending depending on **f(d).** When **f (d)** is increasing, then the collision avoidance motion is getting important with respect to robot motions. However, target reaching motions are compiled in nullspace in the collision avoidance control and if **f (d)** is not "1", the robot control contributes to move to the target. This enables a smooth task priority switching.

*Example*

In order to avoid occlusion problems, a "virtual object" in space is defined and taken into account when performing the collision avoidance. Thus a spacen be defined which a robot segment is not allow to penetrate. This can be used for a "Occlusion avoidance": One of the major problem when robots grasp something are occlusions which their hands hide target objects. According to the invention a virtual obstacle can be designed between the robot head and the target so that the hands of the robot do not pass the gaze line towards to the target. Just before the robot reaches to the object, the virtual object is inactivated.

**Summary:**

The present invention relates to a technique for safety mechanism which protects articulated robots' hardware and its environment. In particular, it can be used for robots which interact with dynamic environment. It is difficult to be predicted in real-time. Here are some examples on robots which this technique can be used:

- Tracking moving targets which are given by cameras: Robots have to track moving targets which cannot be predicted and have to avoid self collisions simultaneously.

- Bimanual manipulations: Robots move both arms at the same time according to tasks. Each arm has a target respectively and they sometimes cross each other.

- Avoidance for moving obstacles: Robots have to avoid such as humans.

The collision avoidance uses only one degree of freedom. On the other hand, target reaching motions are contributed by,

1. nullspace in the collision avoidance control.
2. task space in the robot control.

The fact that the collision avoidance motion is limited to a single degree-of-freedom increases the potential that the nullspace motion of the collision avoidance control allows for a target reaching motion although the collision avoidance control allocates the highest priority to the collision avoidance task and not to the target reaching task. Thus the movement towards a target is more efficient in comparison to prior art approaches.

**GLOSSARY**

| | | |
|---|---|---|
| Effector | | In industrial robots it is commonly the manipulator. In humanoid robotics, the effector is often defined as a reference point of the hand, like for instance the finger tip. The effector could also be the head, which is controlled to look at a certain point or in a certain direction. |
| Task coordinates | | Coordinates in which the movement of the effector is described. There are many ways to describe effector motions. For effector positions, commonly the x-, y and z-elements of a position vector are chosen. For spatial orientations, the task is often described in Euler angles or quaternions. In many cases, special descriptions for a task are used. |
| Task space | | The space that is described by the task coordinates. If e.g. the hand position of a robot in x-, y- and z-direction is controlled, the task space has the dimension 3 and is spanned by these coordinates. |
| Null space | | The space in which a motion does not influence the task space motion. If e.g. a robot has 7 degrees of freedom, and the task vector is the 3-dimensional hand position, then the null space has 4 dimensions. The system is redundant with respect to the task. All motion of the arm that does not interfere with the task motion is called the null space motion. |
| Trajectory | | A continuous path describing the motion of a system. The trajectory can describe the path of the individual joints, or a path represented in task coordinates. |

**Claims**

1. A method for controlling a robot being provided with at least one visual sensor, comprising the steps of:

   - defining a target for a motion of the robot,
   - calculating a motion control signal adapted for the robot reaching the target,
   - calculating a collision avoidance control signal for avoiding collision of segments of the robot and a virtual object which is set up between the visual sensing means and the target, based on the closest points of the segments of the robot and the virtual object, and
   - combining the motion control signal and the collision avoidance control signal,

   wherein the weight of the motion control output signal is the higher the lower a calculated collision risk, and

   - controlling a motion of the robot according to the combined signal such that no segment of the robot enters the space defined by the virtual object.

2. The method according to claim 1, wherein the virtual object is symmetrical around an axis connecting the center of the visual sensing means and the target center position.

3. The method according to claim 1 or 2, wherein the virtual object defines a space having the contours of a three dimensional ellipsoid.

4. The method according to any of the preceding claims, wherein the weights are changed gradually in order to perform a soft task switching between target reaching by motion and collision avoidance.

5. The method according to claim 1 or 2, wherein the motion control calculation comprises the step of mapping a collision avoidance motion in the nullspace and a target reaching motion in the task space.

6. The method according to any of the preceding claims, wherein the weight of the collision avoidance output signal is zero as long as the distance between the closest points is larger than a preset avoidance threshold distance.

7. The method according to any of the preceding claims, comprising the steps of:

**EP 1 972 416 B1**

carrying out a collision avoidance control by

- calculating the two closest point of different segments of the robot connected to each other via at least one joint, or a segment of the robot and another object, and
- controlling a collision avoidance motion of the robot only in the dimension along the connection line between the closest points.

8. The method according to claim 5,
wherein the nullspace of the collision avoidance control is allocated to the target reaching by motion.

9. The method according to any of the preceding claims,
wherein the collision avoidance control maps a collision avoidance motion in the task space and a target reaching motion in the nullspace.

10. A computer program product,
implementing a method according to any of the preceding claims when run on a computing device.

11. A robot having visual sensing means and a motion control unit,
wherein the motion control unit of the robot comprises

- a distance computing module calculating the two closest points between a segment of the robot and a virtual object defining a space between the visual sensing means and a target,
- a control module,
- a collision avoidance module supplied with an output signal from the distance computing module, configured to calculate a collision avoidance control signal for avoiding collision of segments of the robot and the virtual object,
- a blending control unit for combining the output control signals of the control module and the collision avoidance control module in order to generate a motion control signal for the robot.

12. The robot according to claim 11,
which is a humanoid biped robot.

13. The robot according to claims 11 or 12,
having a head portion which is moveable relative to a main body of the robot and which head is provided at its front portion with two cameras.

**Patentansprüche**

1. Verfahren zur Steuerung eines Roboters, der mit wenigstens einem visuellen Sensor versehen ist, das die folgenden Schritte aufweist:

- Definieren eines Ziels für eine Bewegung des Roboters,
- Berechnen eines Bewegungssteuersignals, das dafür geeignet ist, dass der Roboter das Ziel erreicht,
- Berechnen eines Kollisionsvermeidungssteuersignals zur Vermeidung einer Kollision von Segmenten des Roboters und eines virtuellen Objekts, das zwischen der visuellen Abtasteinrichtung und dem Ziel eingerichtet ist, basierend auf den nächsten Punkten der Segmente des Roboters und des virtuellen Objekts, und
- Kombinieren des Bewegungssteuersignals und des Kollisionsvermeidungssteuersignals, wobei das Gewicht des Bewegungssteuerausgangssignals umso höher ist, je niedriger ein berechnetes Kollisionsrisiko ist, und
- Steuern einer Bewegung des Roboters gemäß dem kombinierten Signal, so dass kein Segment des Roboters in den von dem virtuellen Objekt definierten Raum eintritt.

2. Verfahren nach Anspruch 1,
wobei das virtuelle Objekt um eine Achse, welche die Mitte der visuellen Abtasteinrichtung und die Zielmittenposition verbindet, symmetrisch ist.

3. Verfahren nach Anspruch 1 oder 2,
wobei das virtuelle Objekt einen Raum mit den Umrissen eines dreidimensionalen Ellipsoids definiert.

4. Verfahren nach einem der vorhergehenden Ansprüche, wobei die Gewichte allmählich geändert werden, um eine weiche Aufgabenumschaltung zwischen der Zielerreichung durch die Bewegung und der Kollisionsvermeidung durchzuführen.

5. Verfahren nach Anspruch 1 oder 2,
wobei die Bewegungssteuerberechnung den Schritt der Abbildung einer Kollisionsvermeidungsbewegung im Nullraum und einer Zielerreichungsbewegung im Aufgabenraum aufweist.

6. Verfahren nach einem der vorhergehenden Ansprüche, wobei das Gewicht des Kollisionsvermeidungsausgangssignals null ist, solange der Abstand zwischen den nächsten Punkten größer als ein vorgegebener Schwellwertabstand ist.

7. Verfahren nach einem der vorhergehenden Ansprüche, das die folgenden Schritte aufweist: Ausführen einer Kollisionsvermeidungssteuerung durch

- Berechnen der zwei nächsten Punkte verschiedener Segmente des Roboters, die über wenigstens ein Gelenk miteinander verbunden sind, oder eines Segments des Roboters und eines anderen Objekts, und
- Steuern einer Kollisionsvermeidungsbewegung des Roboters nur in der Dimension entlang der Verbindungslinie zwischen den nächsten Punkten.

8. Verfahren nach Anspruch 5,
wobei der Nullraum der Kollisionsvermeidungssteuerung der Zielerreichung durch Bewegung zugewiesen wird.

9. Verfahren nach einem der vorhergehenden Ansprüche, wobei die Kollisionsvermeidungssteuerung eine Kollisionsvermeidungsbewegung in dem Aufgabenraum und eine Zielerreichungsbewegung in dem Nullraum abbildet.

10. Computerprogrammprodukt,
das ein Verfahren nach einem der vorhergehenden Ansprüche implementiert, wenn es auf einer Computervorrichtung laufen gelassen wird.

11. Roboter mit einer visuellen Abtasteinrichtung und einer Bewegungssteuereinheit, wobei die Bewegungssteuereinheit des Roboters aufweist:

- ein Abstandsberechnungsmodul, das die zwei nächsten Punkte zwischen einem Segment des Roboters und einem virtuellen Objekt, das einen Raum zwischen der visuellen Abtasteinrichtung und einem Ziel definiert, berechnet,
- ein Steuermodul,
- ein Kollisionsvermeidungsmodul, das mit einem Ausgangssignal von dem Abstandsberechnungsmodul versorgt wird, das konfiguriert ist, um ein Kollisionsvermeidungssteuersignal zur Vermeidung der Kollision von Segmenten des Roboters und des virtuellen Objekts zu berechnen,
- eine Mischsteuereinheit zum Kombinieren der Ausgangssteuersignale des Steuermoduls und des Kollisionsvermeidungsmoduls, um ein Bewegungssteuersignal für den Roboter zu erzeugen.

12. Roboter nach Anspruch 11,
der ein menschenähnlicher zweibeiniger Roboter ist.

13. Roboter nach den Ansprüchen 11 oder 12,
der einen Kopfabschnitt hat, der relativ zu einem Hauptkörper des Roboters beweglich ist und wobei der Kopf an seinem vorderen Abschnitt mit zwei Kameras versehen ist.


**Revendications**

1. Procédé de commande d'un robot pourvu d'au moins un capteur visuel,
comprenant les étapes de :

- définition d'une cible pour un mouvement du robot,
- calcul d'un signal de commande de mouvement adapté au robot atteignant la cible,

- calcul d'un signal de commande d'évitement de collision pour éviter une collision de segments du robot et d'un objet virtuel qui est installé entre le moyen de détection visuel et la cible, d'après les points les plus proches des segments du robot et de l'objet virtuel, et
- combinaison du signal de commande de mouvement et du signal de commande d'évitement de collision,

dans lequel le poids du signal de sortie de commande de mouvement est d'autant plus élevé que le risque de collision calculé est faible, et

- la commande d'un mouvement du robot selon le signal combiné de telle sorte qu'aucun segment du robot n'entre dans l'espace défini par l'objet virtuel.

2. Procédé selon la revendication 1,
dans lequel l'objet virtuel est symétrique autour d'un axe reliant le centre du moyen de détection visuel et la position de centre cible.

3. Procédé selon la revendication 1 ou 2,
dans lequel l'objet virtuel définit un espace ayant les contours d'un ellipsoïde à trois dimensions.

4. Procédé selon l'une quelconque des revendications précédentes, dans lequel les poids sont changés progressivement afin de réaliser une commutation douce entre l'atteinte de cible par mouvement et l'évitement de collision.

5. Procédé selon la revendication 1 ou 2,
dans lequel le calcul de commande de mouvement comprend l'étape de mise en correspondance d'un mouvement d'évitement de collision dans l'espace nul et d'un mouvement d'atteinte de cible dans l'espace de tâche.

6. Procédé selon l'une quelconque des revendications précédentes, dans lequel le poids du signal de sortie d'évitement de collision est de zéro tant que la distance entre les points les plus proches est plus grande qu'une distance seuil d'évitement préétabli.

7. Procédé selon l'une quelconque des revendications précédentes, comprenant les étapes de :

réalisation d'une commande d'évitement de collision par

- calcul des deux points les plus proches de différents segments du robot reliés les uns aux autres via au moins une articulation, ou un segment du robot et un autre objet, et
- commande d'un mouvement d'évitement de collision du robot uniquement dans la dimension le long de la droite de liaison entre les points les plus proches.

8. Procédé selon la revendication 5,
dans lequel l'espace nul de la commande d'évitement de collision est alloué à l'atteinte de cible par mouvement.

9. Procédé selon l'une quelconque des revendications précédentes, dans lequel la commande d'évitement de collision met en correspondance un mouvement d'évitement de collision dans l'espace de tâche et un mouvement d'atteinte de cible dans l'espace nul.

10. Produit-programme d'ordinateur,
implémentant un procédé selon l'une quelconque des revendications précédentes lorsqu'il est exécuté sur un dispositif informatique.

11. Robot comportant un moyen de détection visuel et une unité de commande de mouvement,
dans lequel l'unité de commande de mouvement du robot comprend

- un module de calcul de distance calculant les deux points les plus proches entre un segment du robot et un objet virtuel définissant un espace entre le moyen de détection visuel et une cible,
- un module de commande,
- un module d'évitement de collision alimenté en un signal de sortie provenant du module de calcul de distance, configuré pour calculer un signal de commande d'évitement de collision pour éviter une collision de segments du robot et de l'objet virtuel,

- une unité de commande de mélange pour combiner les signaux de commande de sortie du module de commande et du module de commande d'évitement de collision afin de générer un signal de commande de mouvement pour le robot.

**12.** Robot selon la revendication 11,
qui est un robot bipède humanoïde.

**13.** Robot selon les revendications 11 ou 12,
ayant une portion de tête qui peut se déplacer par rapport à un corps principal du robot et laquelle tête est pourvue de deux caméras au niveau de sa portion avant.

**Figure 1**

**Figure 2**

**Figure 3**

**Figure 4**

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAMES KUFFNER et al.** Self-collision detection and prevention for humanoid robots. *proceedings of the IEEE International Conference on Robotics and Automation,* 2002
- **JAMES KUFFNER et al.** Dynamically-stable motion planning for humanoid robots. *Autonomous Robots,* 2002, vol. 12, 105-118
- **MICHAEL GIENGER ; HERBERT JANSSEN ; CHRISTIAN GOERICK.** Task-oriented whole body motion for humanoid robots. *In proceedings of the IEEERAS International Conference on Humanoid Robots,* 2005
- **MICHAEL GIENGER ; HERBERT JANSSEN ; CHRISTIAN GOERICK.** Exploiting task intervals for whole body robot control. *In proceedings of the IEEE/RSJ International Conference on Intelligent Robots and Systems,* 2006
- **DAVID FOLIO et al.** A controller to avoid both occlusions and obstacles during a vision-based navigation task in a cluttered environment. *in proceedings of the 44th Conference on Decision and Control, and the European Control Conference 2005,* 12 December 2005